# EUROPEAN PATENT APPLICATION

(11) **EP 3 944 956 A1**
(43) Date of publication of application: **02.02.2022**
(21) Application number: 21188270.9
(22) Date of filing: 28.07.2021
(51) Int. Cl.: B32B 3/02, B32B 3/04, B32B 3/14, B32B 3/30, B32B 5/12, B32B 5/14, B32B 5/26, B32B 5/30, B32B 7/022

(54) **COMPOSITE THIN WINGBOX ARCHITECTURE FOR SUPERSONIC BUSINESS JETS**

(30) Priority: 29.07.2020 US 202063058019 P
(71) Applicant: The Boeing Company, Chicago, IL 60606 (US)
(72) Inventor: BEHZADPOUR, Forouzan, CHICAGO, 60606 (US); STICKLER, Patrick B., CHICAGO, 60606 (US)
(74) Representative: Sandri, Sandro

(57) **Abstract**

An apparatus including one or more panels including an outer face sheet comprising a plurality of first composite materials; an inner face sheet comprising a plurality of second composite materials; and a plurality of foam pieces disposed between the outer face sheet and the inner face sheet, wherein the foam pieces reduce warping of the panels.

## Description

### BACKGROUND

### 1. Field

The present disclosure relates to systems and methods for manufacturing wing panels for an aircraft wing.

### 2. Description of the Related Art

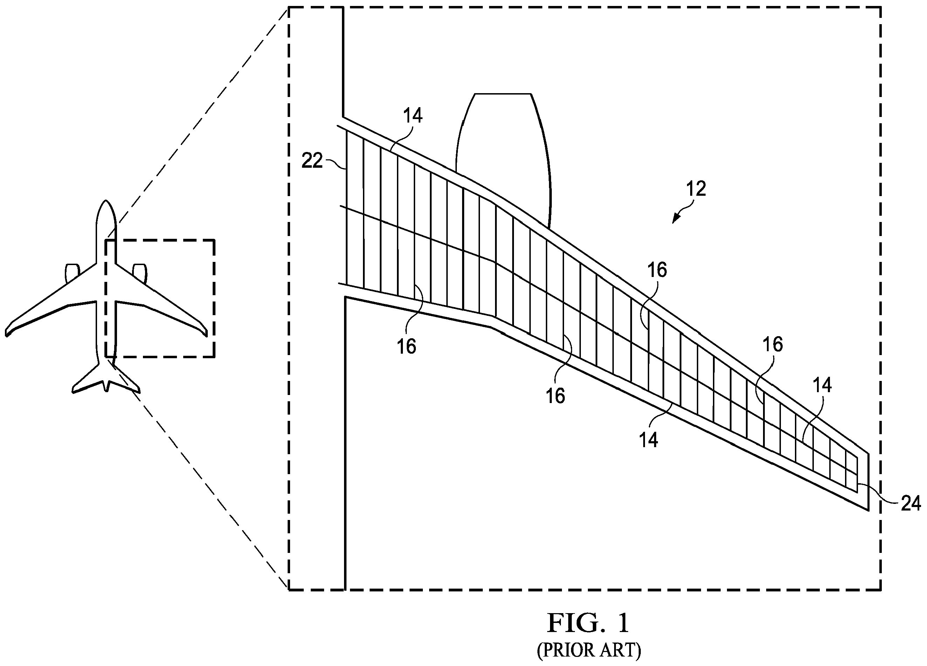

Fig. 1 is a schematic representation of a typical construction of the interior structure of an aircraft wing 12. The interior structure of the wing 12 includes a framework of spars 14 and ribs 16 that are contained inside the exterior skin 18 of the wing. The spars 14 run the length of the wing from a fuselage end or root end 22 of the wing 12 to a tip end 24 of the wing.

The spars 14 and ribs 16, together with stringers attached to the exterior skin, provide structural support for the wing. The stringers comprise structural support members that attach to the exterior skin 18 so as to transfer the bending loads acting on the wing 12 onto the internal structures such as the ribs 16 and spars 14. In various conventional wings, the exterior skin 18 comprises composite panels (manufactured with prepreg tapes) that closely resemble their aluminum counterparts and therefore do not mask the weaknesses of the composite panels. Moreover, the stringers comprise open section stringers, a carry-over from aluminum wings, that are incompatible with the prepreg tape in the composite panels. Therefore, conventional composite panels are prone to defects and excessive warpage when loads are applied, even during manufacturing. As a result, composite panels have dimensions that deviate from the design specifications. With warpage, composite panels may not fit with other composite parts as desired when assembling the parts for the aircraft.

None-the-less, warpage of composite panels is considered an acceptable manufacturing deficiency that can be addressed through the use of shims to align parts. However, the installation of shims is time-consuming and expensive and also adds weight to the aircraft. Moreover, the use of shims does not address the problem of reduced strength of the composite panel or low pull off strength of the stringers due to the warping and formation of noodle cracking in the stringers.

Thus, there exists a need for composite panels that have increased strength, reduced weight, and reduce the need for intensive labor during manufacturing. Embodiments of the present disclosure satisfy this need.

### SUMMARY

The present disclosure describes a novel panel, a wing including a plurality of the panels, and an airplane including the wing. The panel and wing are embodied in many ways, including but not limited to, the following.
1. One or more panels including:
   an outer face sheet comprising a plurality of first composite materials;
   an inner face sheet comprising a plurality of second composite materials; and
   a plurality of foam pieces disposed between the outer face sheet and the inner face sheet, wherein the foam pieces reduce warping of the panels.
2. The apparatus of example 1, wherein the foam pieces have a first thickness T1, each of the one or more panels (200) have a second thickness (T2), the outer face sheet has a third thickness (T3), the inner face sheet has a fourth thickness (T4), and 5*T4 < T3< 10*T4.
3. The apparatus of example 1, wherein:
   each of the foam pieces have a first thickness (T1), a first length (LI), a surface area, a shape, and a spacing tailored for a stiffness and structural efficiency of a wing on a supersonic aircraft or an aircraft capable of seating 150 passengers or less.
4. The apparatus of example 3, wherein:
   the plurality of first composite materials includes a plurality of first plies having a first stacking sequence,
   the plurality of second composite materials includes a plurality of second plies having a second stacking sequence, and
   the first stacking sequence and the second stacking sequence are tailored for the stiffness and the structural efficiency.
5. The apparatus of example 1, wherein the outer face sheet includes a plurality of recesses, each of the recesses seating and locating one of the foam pieces.
6. The apparatus of example 1, wherein:
   each of the foam pieces comprise a first sidewall, a second sidewall, a top, and a base,
   the first sidewall and the second sidewall are inclined at a first angle with respect to the top in a range of 90-130 degrees, and
   the first sidewall and the second sidewall are inclined at a second angle (236) with respect to the base in a range of 50-90 degrees.
7. The apparatus of example 1, wherein:
   the inner face sheet is in physical contact with the outer face sheet in first regions between the foam pieces, and
   the plurality of first composite materials, the plurality of second composite materials, or the plurality of first composite materials and the plurality of second composite materials have a higher stiffness in the first regions as compared to in second regions above or below the foam pieces.
8. The apparatus of example 1, wherein the inner face sheet, the outer face sheet, and the foam are co-cured and the foam pieces comprise a material that does not degrade at a temperature of at least 350 degrees Fahrenheit.
9. The apparatus of example 1, wherein the foam pieces have a density in a range of 48-240 kg/m³ (3-15 pounds per cubic feet (lbs/ft³)) and a first thickness T1 in a range in a range of (1,27cm<T1<6.35cm (0.5" < T1 < 2.5" where " is inches (i.e., T1 in a range in a range of 0.5 inches < T1 < 2.5 inches)).
10. The apparatus of example 1 comprising a wing box, the wing box including:
   the panels comprising a first panel and a second panel;
   a first spar chord attached to the first panel;
   a second spar chord attached to the second panel; and
   a first spar connecting the first spar chord and the second spar chord.
11. A wing comprising the apparatus of example 1, comprising:
   the panels comprising a first panel and a second panel;
   a base skin including the second panel;
   a top skin including the first panel;
   a wing box including:
      a forward spar section including:
         a first spar chord attached to the first panel at a first position (P1);
         a second spar chord attached to the second panel at a second position (P2); and
      a first spar connecting the first spar chord and the second spar chord;
      an aft spar section including:
         a third spar chord attached to the first panel at a third position P3;
         a fourth spar chord attached to the second panel at a fourth position (P4); and
         a second spar connecting the third spar chord and the fourth spar chord (226d); and wherein:
   the first spar and the second spar each extend along a length of an interior of the wing between a root end of the wing and a tip end of the wing; and
   the first spar and the second spar each intersect with a plurality of ribs directly attached to the base skin and the top skin; and
   each of the ribs are located within the wing box at a plurality of different locations along the length of the wing.
12. The wing of example 11, wherein:
   the inner face sheet is in physical contact with the outer face sheet in first regions between the foam pieces, and
   in the first regions, the plurality of first composite materials include a higher number of first fiber tows having a first orientation comprising a zero direction along a direction of a length of the ribs, as compared to in second regions, so as to provide higher stiffness in the first regions as compared to in second regions above or below the foam pieces, and
   in the first regions, the plurality of second composite materials comprise a higher number of second fiber tows having a second orientation comprising the zero direction along the direction of the length of the ribs, as compared to in the second regions, so as to provide the higher stiffness.
13. A supersonic business jet comprising the wing of example 12.
14. A regional aircraft comprising the wing of example 12.
15. A method of making one or more panels, comprising:
   laying one or more first composite materials comprising a plurality of first fiber tows disposed in a first tape;
   laying a plurality of foam pieces on the first face sheet;
   laying one or more second composite materials, including a plurality of second fiber tows disposed in a second tape, on the foam pieces so as to form a structure including the one or more first composite materials, the one or more second composite materials, and the foam pieces, wherein the first tape and the second tape are pre-impregnated with a resin prior to the laying or comprise preforms with the resin infused after the laying; and
   curing the structure combined with the resin in an autoclave at a pressure and temperature of at least 300 degrees Fahrenheit, so as to form the structure into one or more panels having an aerodynamic surface, wherein the foam pieces prevent or reduce warping, buckling or collapse of the structure (200a) and the aerodynamic surface under the pressure.
16. The method of example 15, wherein the one or more first composite materials, the one or more second composite materials, and the foam pieces are co-bonded and co-cured.
17. The method of example 15, further comprising locally controlling a stiffness of the panel by varying a first orientation of the first fiber tows in the first tape and a second orientation of the second fiber tows in the second tape across a length (L4) of the panel, so as to form first regions having a higher stiffness than second regions, wherein the first regions are between the second regions (270).
18. The method of example 17, wherein the first regions have a length (L5) between the foam pieces tailored to prevent breakage of the panel and allow flexure of the panel in a wing on an aircraft.
19. The method of example 17, further comprising locally tailoring the stiffness taking into account an amount of the foam pieces in the panel, wherein the amount of the foam pieces is tailored to obtain a predetermined weight of the wing.
20. The method of example 15, comprising:
   forming a wing comprising the panels including a first panel and a second panel, including:
   forming a base skin including the second panel;
   forming a top skin including the first panel;
   forming a wing box including:
      a forward spar section including:
         a first spar chord attached to the first panel at a first position (P1);
         a second spar chord attached to the second panel at a second position (P2); and
         a first spar connecting the first spar chord and the second spar chord;
      an aft spar section including:
         a third spar chord attached to the first panel at a third position P3;
         a fourth spar chord attached to the second panel at a fourth position (P4); and
         a second spar connecting the third spar chord and the fourth spar chord; and wherein:
            the first spar and the second spar each extend along a length of an interior of the wing between a root end of the wing and a tip end of the wing; and
      disposing a plurality of ribs wherein the first spar and the second spar each intersect with the plurality of ribs directly attached to the base skin and the top skin and wherein each of the ribs are located within the wing box at a plurality of different locations along the length of the wing.

### BRIEF DESCRIPTION OF THE DRAWINGS

Fig. 1 is a schematic representation of the interior structure of a prior art aircraft wing comprising a framework of spars and ribs.
Fig. 2A illustrates is a cross-section of an example panel.
Fig. 2B illustrates an example ply or tape comprising fiber tows.
Fig. 2C illustrates an example fabric including fiber tows.
Fig. 2D is a cross sectional schematic of an example fiber tow.
Fig. 2E is a cross-sectional schematic of an example panel including a plurality of plies.
Fig. 3 illustrates is a cross-section of an example wing box including a plurality of the panels illustrated in Fig. 2A.
Fig. 4A is an example cross-sectional view of a wing including a wing box.
Fig. 4B is an example view of a wing showing the framework of ribs, spars, and wing box in relation to one another.
Fig. 5 is a schematic representation of an exemplary airplane including two of the wings illustrated in Figs. 4A.
Fig. 6 is a flowchart illustrating an example method of making a panel, wing, or aircraft.

### DESCRIPTION

In the following description, reference is made to the accompanying drawings which form a part hereof, and which is shown, by way of illustration, several embodiments. It is understood that other embodiments may be utilized and structural changes may be made without departing from the scope of the present disclosure.

### Technical Description

The present disclosure describes a novel architecture for a panel on a structure such as, but not limited to, a wing on an aircraft. In one or more examples, the panel is a wing panel tailored to meet the stringent aeroelasticity requirements for wings on a supersonic aircraft or the specific requirements of wings on a regional aircraft or business jet.

### A. Example Panel Structure

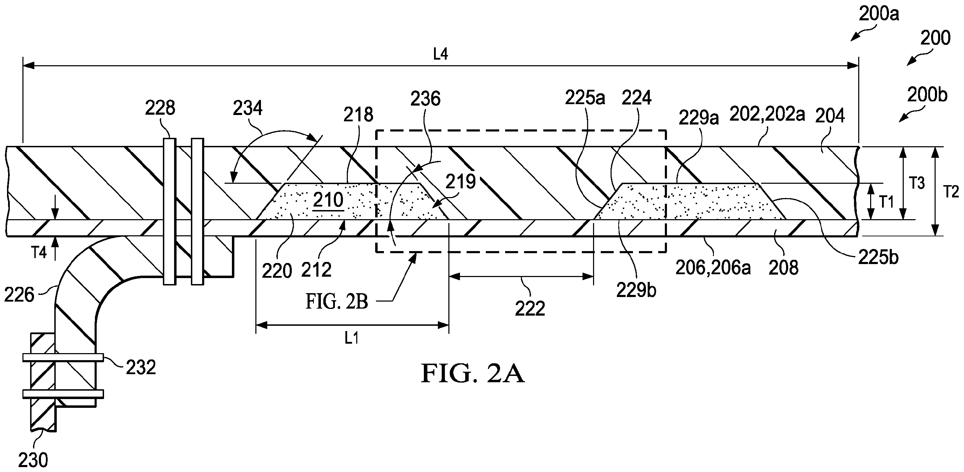

Fig. 2A illustrates a panel 200 or structure 200a including an outer face sheet 202 (or outer skin 202a or exterior layer) comprising a plurality of first composite materials 204; an inner face sheet 206 (or inner skin 206a or inner layer) comprising a plurality of second composite materials 208; and foam 210 (e.g., a plurality of foam pieces 212) disposed between the outer face sheet 202 and the inner face sheet 206. In this way, the panel 200 comprises a split skin 200b comprising the outer skin 202a separated from the inner skin 206a by the foam 210.

In one or more examples, each of the foam pieces 212 have a first thickness T1, a first length L1, a surface area 219, a shape 220, and a spacing 222 tailored for a predetermined stiffness and predetermined structural efficiency (e.g., configured for a wing including the panel 200 on an aircraft).

In one or more examples, the foam pieces 212 include a taper 224. For example, each of the foam pieces 212 comprise a first sidewall 225a, a second sidewall 225b, a top 229a, and a base 229b, wherein the first sidewall 225a and the second sidewall 225b are inclined at a first angle 234 (with respect to the top 229a) in a range of 90-130 degrees, and the first sidewall 225a and the second sidewall 225b are inclined at a second angle 236 (with respect to the base) 229b in a range of 50-90 degrees. In one or more examples, the first angle 234, the second angle 236, a ratio of the second length L2 of the top 229a to a third length L3 of the base 229b, a density of the foam 210, and/or the spacing 222 (determining how many foam pieces 212 in the chordwise direction) are configured to achieve a certain stiffness and structural efficiency for the panel 200.

Example dimensions for the panel 200 include, but are not limited to, the panel 200 having a second thickness T2 in a range of 2.54-12.7 cm (1-5 inches), a fourth length L4, and a width W (perpendicular to the fourth length L4) in a range of 7.62-30.48 cm (3-12 inches), the outer face sheet 202 having a third thickness T3, and the inner face sheet 206 having a fourth thickness T4. In one or more examples, the foam pieces 212 have the first thickness T1 in a range in a range of 1.27<T1<6.35 cm (0.5" < T1 < 2.5") and/or the outer skin 202 has a thickness T3 approximately 5-10 times the thickness T4 of the inner skin (5*T4 < T3< 10*T4).

Also illustrated in Fig. 2A are one or more spar chords 226 fastened to the inner face sheet 206 at a first end of the panel 200 using first fasteners 228; and one or more spars 230 secured to the one or more spar chords 226 using second fasteners 232..

### B. Example Ply Configurations

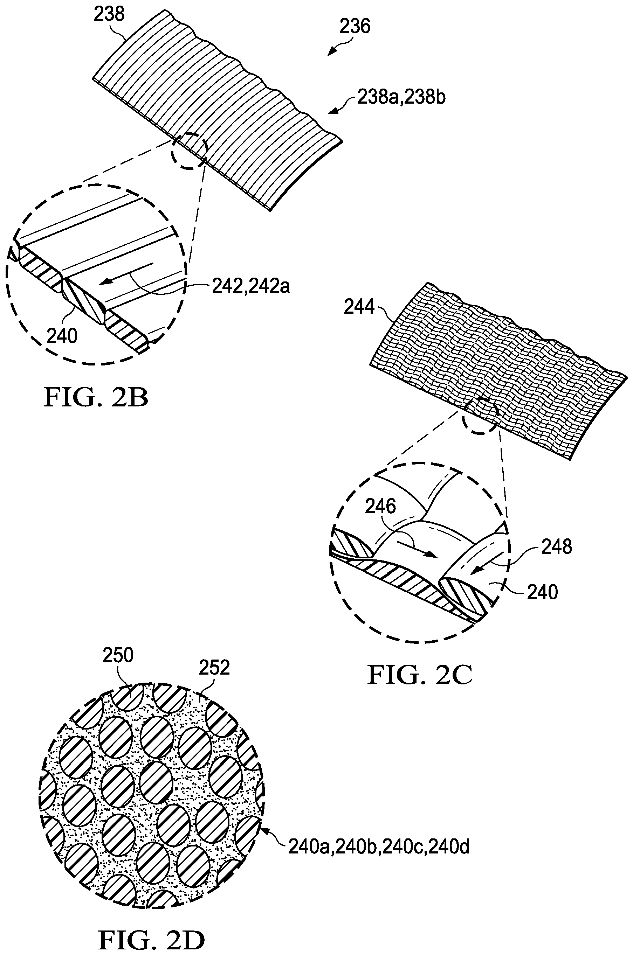

Fig. 2B illustrates a ply 236 comprising a tape 238, the tape 238 including fiber tows 240 aligned along an alignment direction 242. In various examples, the fiber tows 240 are aligned along the alignment direction 242 comprising a 0 degree orientation 242a or a 45 degree orientation. Fig. 2C illustrates a fabric 244 comprising fiber tows 240 aligned in a first direction 246 and fiber tows 240 aligned in a second direction 248, wherein the fiber tows 240 aligned in the first direction 246 and the fiber tows 240 aligned in the second direction 248 are woven together to form the fabric 244. Fig. 2D illustrates the fiber tows 240 comprise filaments 250 combined with a resin 252.

Example materials for the fiber tows include, but are not limited to, materials comprising or consisting essentially of, glass, fused silica, fiberglass, metal, carbon fiber, carbon, boron, metal, mineral and polymer, etc. Examples of the polymers include, but are not limited to, thermoplastics, such as polyamide, polyetherketone (PEK), polyether ether ketone (PEEK), polyetherketoneketone (PEKK), Polyetherimide (PEI), or hybrid forms of thermoplastics, with modifiers and/or inclusions such as carbon nanotube(s), graphene, clay modifier(s), discontinuous fiber(s), surfactant(s), stabilizer(s), powder(s) and particulate(s).

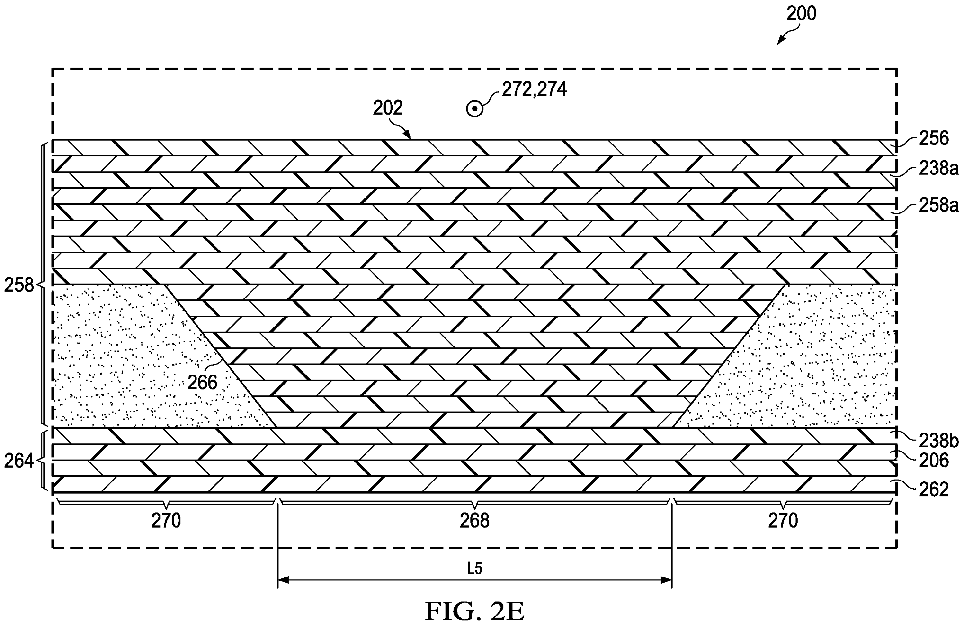

Fig. 2E illustrates the outer face sheet 202 or outer skin 202a comprises the plurality of first composite materials 204 including a plurality of first plies 256 (e.g., each comprising the tape 238 comprising a first tape 238a and a plurality of the fiber tows 240 comprising first fiber tows 240a) having a first stacking sequence 258 (first orientation 258a and/or first number or first density), and the inner face sheet 206 or inner skin 206a comprises plurality of second composite materials 208 including a plurality of second plies 262 (e.g., each comprising the tape 238 comprising a second tape 238b and a plurality of the fiber tows 240 comprising second fiber tows240b) having a second stacking sequence 264 (second orientation 264a and/or second number or second density).

In one or more examples, the first stacking sequence 258 and the second stacking sequence 264 are tailored to achieve a predetermined stiffness and the structural efficiency of the panel 200 (e.g., as configured for an airplane wing including the panel). In one or more examples, stiffness is defined as the displacement (in meters) of the panel produced by a force along the same direction in which the force is applied (e.g., units Newtons per meter). In one or more examples, structural efficiency is defined as the mass of the panel divided by the maximum mass supported by the panel.

Fig. 2E further illustrates an example wherein the panel 200 comprises a plank 266 comprising the inner face sheet 206 in physical contact with the outer face sheet 202 in first regions 268 between the foam pieces 212. The plank 266 comprises the plurality of first composite materials 204 and/or the plurality of second composite materials 208 having a higher stiffness in the first regions 268 as compared to in second regions 270 above or below the foam pieces 212 (i.e., so that the first regions comprise stiffened regions). In one or more examples, the higher stiffness in the first regions 268 is achieved by the first regions 268 using a higher number of first plies 256 and/or second plies 262 as compared to in the second regions 270. In one or more further examples, the higher stiffness in the first regions is achieved using a higher number of first plies 256 and/or second plies 262 including fiber tows 240 having a zero degree orientation 242a (as compared to in the second region 270), wherein the zero degree orientation comprises the fiber tows 240 oriented or aligned with their longitudinal axis along a direction 272 of the load 274 on the panel 200. In one or more examples, the plank 266 has a fifth length L5 along the direction of (and including) the spacing 222 between the foam pieces 212. In one or more examples, the plank 266 has a thickness approximately equal to a thickness (T1) of the foam (e.g., so as to prevent potential additional loads arising due to any difference in the thickness T1 from the thickness of the plank 266).

### C. Example Foam Materials

In various examples, the foam 210 comprises a lightweight material that does not degrade at a temperature of at least 176°C (350 degrees Fahrenheit) or at a temperature used during curing of the plurality of first composite materials 204 and the plurality of second composite materials 208. Example materials include, but are not limited to, a foam or a material (e.g., a polymer such as, but not limited to, polymethylacrylimide, polyurethane, polyvinyl chloride) comprising or enclosing a cellular structure. The cellular structure includes cells having cell walls (e.g., polymer cell walls) enclosing gas (e.g., air) resulting from introduction of gas bubbles during manufacture. In one or more examples, the foam 210 comprises a plurality of closed cells which are not accessed by any resin applied to the foam 210 (surface cells may be accessed by the resin). Example foams include Rohacell^{™}, Rohacell Hero^{™}, and Rohacell Hero 110^{™}. In one or more examples, the foam 210 is selected to withstand a plurality of thermal cycles (e.g., at least 2000 cycles) between -45 °C to 75 °C (-49° f - 167°) and to have a heat resistance up to at least 221°C (430 degrees Fahrenheit). In one or more examples, the foam 210 has a density in a range of 48-240 kg/m³ (3-15 pounds per cubic feet (lbs/ft³)).

### D. Example wing box

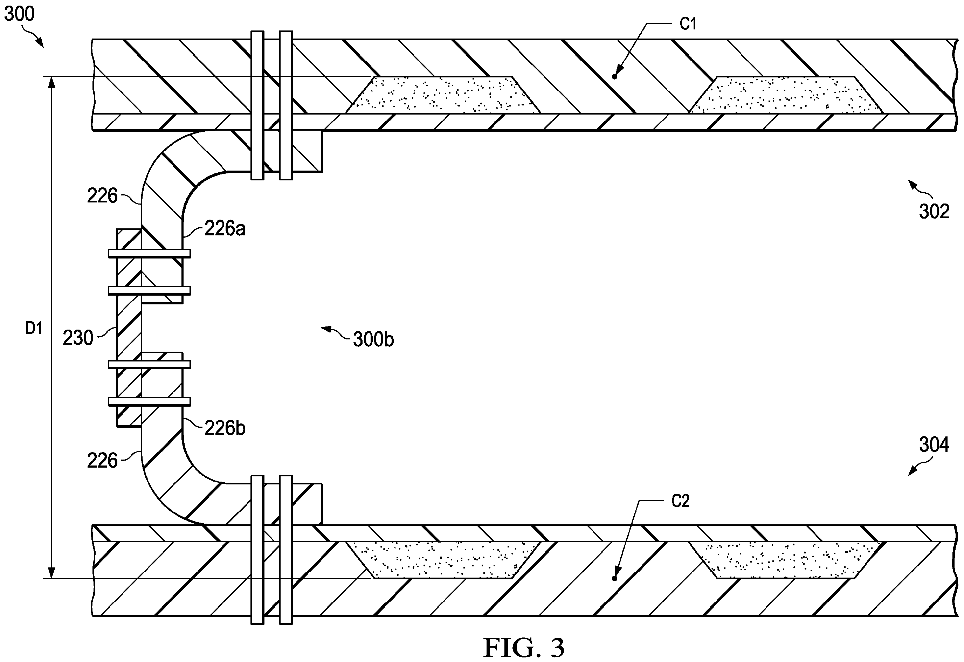

Fig. 3 illustrates a wing box 300 comprising a plurality of the panels 200 illustrated in Fig. 2A. The wing box 300 includes a plurality of the panels 200 comprising a first panel 302 (comprising an upper panel) and a second panel 304 (lower panel); and one or more spar sections 300b including a plurality of the spar chords 226 (comprising a first spar chord 226a attached to the first panel 302 and a second spar chord 226b attached to the second panel 304); and one of the spars 230 attached to the first spar chord 226a and the second spar chord 226b.

The first panel 302 has a first centroid C1 (position of the center of mass), the second panel 304 has a second centroid C2 and the spar chords 226. In one or more examples, the spars 230 are dimensioned so that the first centroid C1 and the second centroid C2 are separated by a distance D1 (as measured along a line joining the first centroid C1 and the second centroid C2) that is maximized by making the outer face sheet 202 much thicker (e.g., 5-10 times thicker) than the inner face sheet (206) on both the upper panel and the lower panel (so that the first centroids C1 are much closer to the wing's surface, thereby maximizing the moment arm to reduce end loads on the panel 200).

### E. Example wing structure

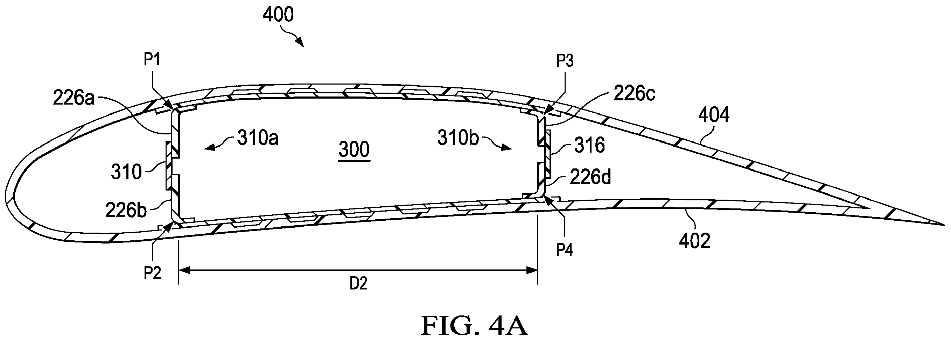

Fig. 4A illustrates a wing 400 comprising the wing box 300 comprising a plurality of the spar chords 226 (including a first spar chord 226a, a second spar chord 226b, a third spar chord 226c, and a fourth spar chord 226d) and a plurality of the spars 230 comprising a first spar 310 and a second spar 316. As illustrated in Fig. 4A, the wing box 300 comprises a pair of the spar sections 300b comprising a forward spar section 310a and an aft spar section 310b. The forward spar section 310a includes the first spar chord 226a attached to the first panel 302 at a first position P1; the second spar chord 226b attached to the second panel 304 at a second position P2; and the first spar 310 (forward spar) connecting the first spar chord 226a and the second spar chord 226b. The aft spar section 310b includes the third spar chord 226c attached to the first panel 302 at a third position P3; the fourth spar chord 226d attached to the second panel 304 at a fourth position P4, and the second spar 316 (aft spar) connecting the third spar chord 226c and the fourth spar chord 226d. The first position P1, the second position P2, the third position P3, and the fourth position P4 are such that the first spar 310 is separated from the second spar 316 by a distance D2 measured along the width W of the panel (in a direction perpendicular to the surfaces of the spars 230). In one or more examples, D2 comprises a distance determined primarily by aerodynamic considerations for the wing.

In one or more examples, the wing 400 comprises a base skin 402 including the second panel 304; a top skin 404 including the first panel 302; and the spar sections 300b connecting the base skin 402 to the top skin 404.

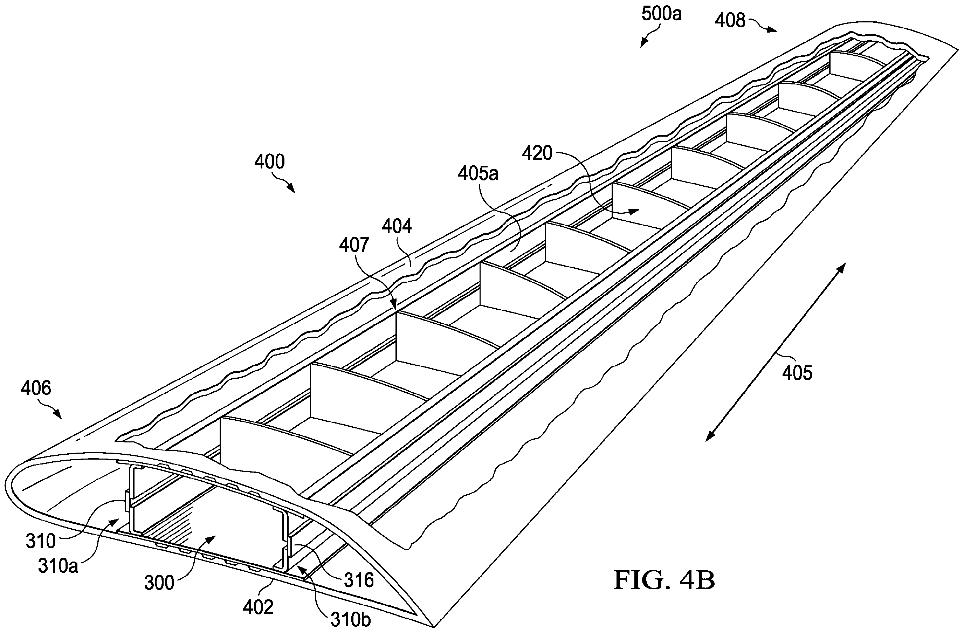

As illustrated in the example of Fig. 4B, the first spar 310 and the second spar 316 each extend along a length 405 of the interior 405a of the wing 400 between a root end 406 of the wing 400 attached to the fuselage and a tip end 408 of the wing 400. The first spar 310 and the second spar 316 each intersect with a plurality of ribs 420 directly attached to the first panel 302 in the top skin 404 and the second panel 304 in the base skin 402. Each of the ribs 420 are seated, fastened, and located within the wing box 300 at a plurality of different locations 407 along the length 405 of the wing 400 from the root end 406 to the tip end 408.

In one or more examples, the first spar 310, the second spar 316, the first spar chord 226a, the second spar chord 226b, the third spar chord 226c, the fourth spar chord 226d, and the ribs 420 each comprise a fabric 244 including a plurality of fourth fiber tows 240d.

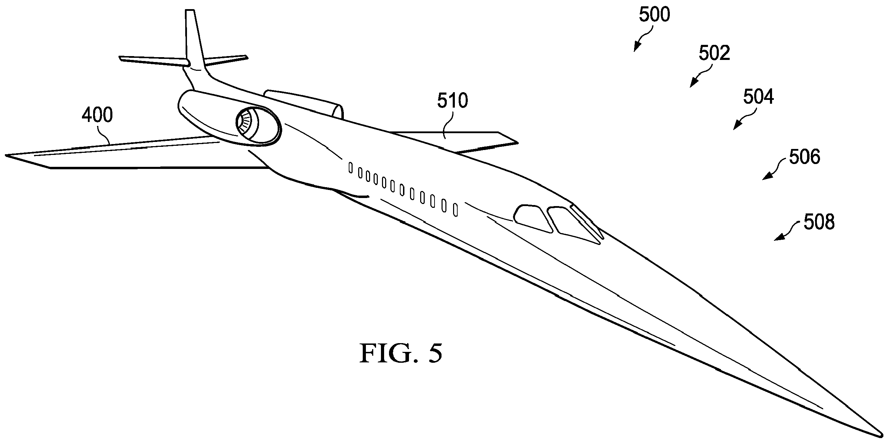

Fig. 5 illustrates an apparatus 500 comprising an airplane 502 comprising the wing 400 having an aerodynamic surface 510, tail, or empennage including the panel 200. Examples of the airplane include a business jet 504, a regional airplane 506, and/or a supersonic aircraft 508.

### F. Example High Aspect Ratio Wings

As compared to conventional subsonic aircraft, the wings on a supersonic aircraft (e.g., a business jet) or a smaller regional aircraft have a higher aspect ratio (length of the wing divided by a width of the wing) which requires a wing 400 having a higher stiffness, leading to a higher risk of flutter (e.g., dynamic flutter), a very thin airfoil characterized a reduced effective depth (the distance D1 between centroids of the first panel 302 and the second panel 304) of the wing, and a shorter chord comprising the distance D2 between first spar 310 (front spar) and the second spar 316 (rear spar) resulting in higher end loads on the panel 200. To meet above criteria, very high modulus layups of the first plies 256 and the second plies 262 are needed. Aluminum alloys or moderate modulus layups of plies in conventional production wings fall short of meeting these requirements. In one or more examples described herein, high modulus layups are achieved using planks 266 comprising first regions 268 of the panel 200 having a higher number or density of first plies 256 or second plies 262 and/or having a higher density or number of first plies 256 or second plies 262 with a zero degree orientation 242a.

### 1. Example split skin, foam, and plank configuration for a high aspect ratio wing

In order to address the higher flutter characteristics of high aspect ratio wings (e.g., as implemented on a supersonic aircraft) in one or more examples, the panels 200 comprise integrally small plank stiffened split panels comprising planks 266 between a split skin 200b, wherein the planks 266 each have a thickness approximately equal to the first thickness T1 of the foam pieces 212. Planks 266 are the most efficient method of stiffening to meet weight and production rate criteria. A split skin 200b maximizes a moment of inertia of the panel by disposing a centroid of the inner skin 206a away from the centroid of the outer skin 202a. Unlike in a structure comprising a discrete stringer, the split skin 200b provides a uniform and continuous moment of inertia and allows the creation of spaces or cavities between the planks 266 to accommodate the foam 210. The foam 210 (e.g., crack-resistant Rohacell) filling the cavities or the spaces provides the dual functionality of a structural tool (an additional source of stiffness to the panel 200) and a manufacturing tool (supporting the inner skin 206a and outer skin 202a during manufacturing). Moreover, the split skin 200a has a smooth surface eliminating wrinkles and a structure that improves damage tolerance of the panel 200 by providing double load redundancy (through each of the inner skin and the outer skin) in case of a complete de-bond of the outer skin from the inner skin.

### 2. Example panel dimensions for thin airfoils

As described above, supersonic aircraft and regional aircraft typically have wings comprising thinner airfoils. However, such airfoils may suffer from reduced stiffness that is less capable of supporting the end loads applied to the wing and the higher flutter. In one or more examples, in order to address these problems, the second thickness T2 of the first panel 302 (upper panel) and the second panel 304 (lower panel) are minimized while providing high stiffness, thereby meeting the stringent aeroelasticity requirements for the wing 400. In one or more examples, the inner skin 206a and outer skin 202a are sufficiently thin (e.g., having a fourth thickness T4 and a third thickness T3, respectively, such that 5xT4 < T3 < 10xT4)) so as to minimize interlaminar stresses in the panel 200 that are major concerns (and often go undetected) when the fourth thickness T4 and third thickness T3 are greater than a threshold value.

Reducing the second thickness T2 of the panel (as well as reducing T3 and T4) increases the wing effective thickness - the distance D1 between the first centroid C1 of the first panel 302 (upper panel) and the second centroid C2 of the second panel 304 (lower panel) - thereby lowering the end loads on the panel 200.

The use of integral small planks 266 having a thickness as described in the previous section provides additional load redundancy for impact damage cases. The planks 266 on the second panel 304 (lower panel) are spaced to stabilize access holes and eliminate the need for internally/externally stiffening doublers around the access holes. Thin panels (having the second thickness T2) are better equipped to flex with the planks 266 so as to avoid a high concentration of point loads (hard points).

### 3. Example panel dimensions for a shorter chord

As discussed above, supersonic aircraft and regional aircraft typically have wings with a shorter chord (the distance D2), which translates to an undesirably higher unit load (kg per meter - pounds per inch) on the wing. In order to support the higher unit load, example panels 200 include the features for thin airfoils described above in section 2. Moreover, small planks 266 having the thickness equal to T1 carry a higher percentage of load than the remainder of the base skin 402 or top skin 404, improving the chordwise load distribution in contrast to bigger stringers that cannot even be fitted inside the thin wing box.

### Example Process Steps

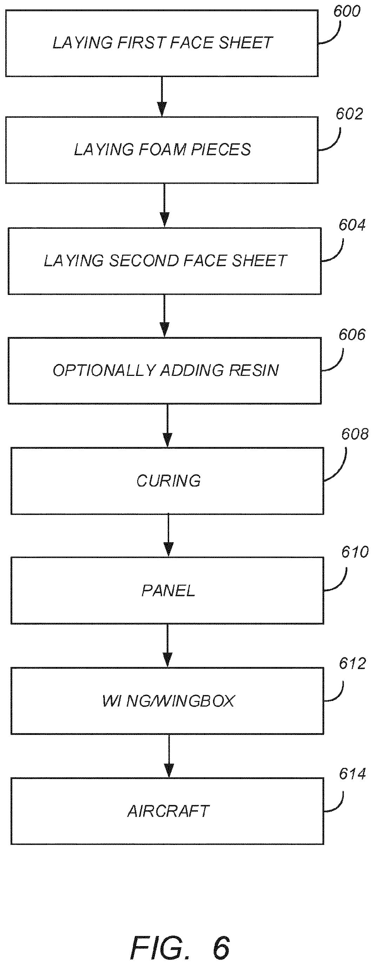

Fig. 6 is a flowchart illustrating a method of making a wing panel or wing.

The method includes the following steps.

Block 600 represents laying a first face sheet comprising one or more first composite materials including a plurality of first fiber tows (240a), e.g., disposed in a first tape and/or a plurality of first plies.

Block 602 represents laying a plurality of foam pieces (e.g., foam sections or foam portions) on the first face sheet.

Block 604 represents laying a second face sheet, including one or more second composite materials including the plurality of second fiber tows (240b) (e.g., disposed in a second tape and/or a plurality of second plies), on the plurality of foam pieces so as to form a structure 200a including the one or more first composite materials, the one or more second composite materials, and the foam pieces.

In one or more examples, the foam is selected to have a coefficient of thermal expansion (CTE) that matches (e.g., within 1%) that of the first composite materials and the second composite materials. In one or more examples, the foam has a Poisson's ratio within 1% of that of the first composite materials and second composite materials. In one or more examples, the first thickness T1 and density of the foam are selected to prevent the foam from cracking under internal stresses due to mismatches in between the CTE of the foam and the first composite materials and the second composite materials.

In one or more examples, the foam pieces are cut and assembled into one long piece with puzzle joints between the pieces. In one or more examples, the puzzle joint comprises a gap (e.g., 0.0127cm (0.005") gap) forming fingers that slot the foam pieces 212 together without the use of adhesive filling the gap. In one or more examples, machined foams are dried and sealed prior to installation.

In one or more examples, the laying comprises locally controlling a stiffness of the panel 200 by varying a first orientation 258a of the first fiber tows 240a in the first tape 238a and a second orientation 268a of the second fiber tows 240b in the second tape 238b across a length (L4) of the panel 200, so as to form first regions 268 having a higher stiffness than second regions 270, wherein the first regions 268 are between the second regions 270. In one example, the first regions 268 have a length L5 between the foam pieces tailored to prevent breakage of the panel 200 and allow flexure of the panel 200 in a wing 400 on an aircraft. In one or more further examples, the laying comprises locally tailoring the stiffness taking into account a number, density, and weight of the foam pieces 212 in the panel 200, wherein the number, density, and weight of the foam pieces 212 are tailored to obtain a predetermined weight of the wing 400.

Block 606 represents optionally adding resin. In one or more examples, the first composite materials and the second composite materials are each provided or laid as the composite materials pre-impregnated fabric or tape or as a fabric or tape preform with resin infusion (after laying) to form the structure.

Block 608 represents curing the structure 200a combined with the resin 252 in an autoclave at a pressure and temperature of at least 148°C (300 degrees Fahrenheit), so as to form the structure 200a into one or more panels 200 having an aerodynamic surface 510, wherein the foam pieces 212 prevent or reduce warping, buckling or collapse of the structure 200a and the aerodynamic surface 510 under the pressure. In this example, first composite materials and the second composite materials and the foam pieces are co-bonded and co-cured. However, in other examples, the first composite materials and the second composite materials are separately bonded and/or separately cured.

Block 610 illustrates the end result, an apparatus 550 comprising one or more panels (e.g., as illustrated in Fig. 2A) and referring also to Fig. 2E, Fig. 3, Fig. 4A, Fig. 4B, and Fig. 5.

The apparatus is embodied in many ways including, but not limited to, the following.
1. An apparatus, comprising:
   one or more panels (200) including
   an outer face sheet (202) comprising a plurality of first composite materials (204) ;
   an inner face sheet (206) comprising a plurality of second composite materials (208); and
   a plurality of foam pieces (212) disposed between the outer face sheet (202) and the inner face sheet (206), wherein the foam pieces (212) reduce warping of the panels (200) .
2. The apparatus of example 1, wherein the foam pieces have a first thickness T1, each of the one or more panels (200) have a second thickness (T2), the outer face sheet (202) has a third thickness (T3), the inner face sheet has a fourth thickness (T4), tailored for a stiffness and a structural efficiency of a wing including the panel. In one or more examples, the foam pieces (212) have a density in a range of 48-240 kg/m³ (3-15 pounds per cubic feet (lbs/ft³)) and the thickness T1 in a range in a range of 1.27<T1<6.35 cm (0.5" < T1 < 2.5") and/or 5*T4 < T3< 10*T4.
3. The apparatus of example 1 or example 2, wherein:
   each of the foam pieces (212) have a first thickness (T1), a first length (LI), a surface area (219), a shape (220), and a spacing (222) tailored for a stiffness and structural efficiency of a wing (400) on a supersonic aircraft (508) or a regional aircraft (506) capable of seating 150 passengers or less.
4. The apparatus of any of the examples 1-3, wherein:
   the plurality of first composite materials (204) includes a plurality of first plies (256) having a first stacking sequence (258),
   the plurality of second composite materials (208) includes a plurality of second plies (262) having a second stacking sequence (264), and
   the first stacking sequence (258) and the second stacking sequence (264) are tailored for the stiffness and the structural efficiency.
5. The apparatus of any of the examples 1-4, wherein the outer face sheet (202) includes a plurality of recesses (218), each of the recesses seating and locating one of the foam pieces (210).
6. The apparatus of any of the examples 1-5, wherein:
   each of the foam pieces (212) comprise a first sidewall (225a), a second sidewall (225b), a top (229a), and a base (229b), and
   the first sidewall (225a) and the second sidewall (225b) are inclined at a first angle (234) with respect to the top (229a) in a range of 90-130 degrees, and
   the first sidewall (225a) and the second sidewall (225b) are inclined at a second angle (236) with respect to the base (229b) in a range of 50-90 degrees.
7. The apparatus of any of the examples 1-6, wherein:
   the inner face sheet (206) is in physical contact with the outer face sheet (202) in first regions (268) between the foam pieces (212), and
   the plurality of first composite materials (204), the plurality of second composite materials (208), or the plurality of first composite materials (204) and the plurality of second composite materials (208) have a higher stiffness in the first regions (268) as compared to in second regions (270) above or below the foam pieces (212).
8. The apparatus of examples 1-7, wherein the inner face sheet (206), the outer face sheet (202), and the foam (210) are co-cured and the foam pieces (212) comprise a material that does not degrade at a temperature of at least 350 degrees Fahrenheit.
   Block 612 represents optionally forming a wing box or wing comprising the panels of any of the examples 1-8.
   The forming is embodied in many ways including, but not limited to, the following.
9. Forming a wing comprising the panels (200) including a first panel (302) and a second panel (304), including forming a base skin (402) including the second panel (304); forming a top skin (404) including the first panel (302); and forming a wing box (300). The wing box includes a forward spar section (310a) including: a first spar chord (226a) attached to the first panel (302) at a first position (P1); a second spar chord (226b) attached to the second panel (304) at a second position (P2); and a first spar (310) connecting the first spar chord (226a) and the second spar chord (226b). The wing box further includes an aft spar section (310b) including: a third spar chord (226c) attached to the first panel (302) at a third position P3; a fourth spar chord (226d) attached to the second panel (304) at a fourth position (P4); and a second spar (316) connecting the third spar chord (226c) and the fourth spar chord (226d). The first spar (310) and the second spar (316) each extend along a length (405) of an interior (405b) of the wing (400) between a root end (406) of the wing (400) and a tip end (408) of the wing (400).
10. The forming of example 9 further comprising disposing a plurality of ribs wherein the first spar (310) and the second spar (316) each intersect with the plurality of ribs (420) directly attached to the base skin (402) and the top skin (404) and wherein each of the ribs (420) are located within the wing box (300) at a plurality of different locations (407) along the length (405) of the wing (400).
11. Forming a wing (400) including the wing box (300) of examples 9 or 10, comprising a base skin (402) including the first panel (302) and a top skin (404) including the second panel (304).
12. Forming the wing of example 11, wherein:
   the inner face sheet (206) is in physical contact with the outer face sheet (202) in first regions (268) between the foam pieces (212), and
   in the first regions (268), the plurality of first composite materials (204) include a higher number of first fiber tows (240a) having a first orientation (258a) comprising a zero direction (242a) along a direction of a length (422) of the ribs (420), as compared to in second regions (270), so as to provide higher stiffness in the first regions (268) as compared to in second regions (270) above or below the foam pieces (212), and
   in the first regions (268), the plurality of second composite materials (208) comprise a higher number of second fiber tows (240b) having a second orientation (268a) comprising the zero direction (242a) along the direction of the length (422) of the ribs (420), as compared to in the second regions (270), so as to provide the higher stiffness.
   Block 614 represents optionally disposing the wing or wing box on an aircraft (e.g., airplane 502)
13. In one or more examples, the aircraft comprises a supersonic aircraft (508) (e.g., business jet). Conventional designs of current sub-sonic wings cannot accommodate integrated wing designs and build requirements for supersonic transports. One or more embodiments described herein overcome the deficiencies of conventional designs. Examples of supersonic aircraft include aircraft having a maximum airspeed of at least Mach 1.
14. In one or more examples, the aircraft comprises a regional airplane (506) or business jet. Examples of regional airplanes include, but are not limited to, an airplane having seats for less than 150 passengers, a maximum take of weight of less than 45360 kg (100,000 lbs), and/or a length and/or wingspan of less than 30.48 m (100 ft).

### Conclusion

This concludes the description of the preferred embodiments of the present disclosure. The foregoing description of the preferred embodiment has been presented for the purposes of illustration and description. It is not intended to be exhaustive or to limit the disclosure to the precise form disclosed. Many modifications and variations are possible in light of the above teaching. It is intended that the scope of rights be limited not by this detailed description, but rather by the claims appended hereto.

## Claims

1. An apparatus (550), comprising:
one or more panels ((200) including
an outer face sheet (202) comprising a plurality of first composite materials (204) ;
an inner face sheet (206) comprising a plurality of second composite materials (208); and
a plurality of foam pieces (212) disposed between the outer face sheet (202) and the inner face sheet (206), wherein the foam pieces (212) reduce warping of the panels (200) .

2. The apparatus (500, 550) of claim 1, wherein the foam pieces (212) have a first thickness T1, each of the one or more panels (200) have a second thickness (T2), the outer face sheet (202) has a third thickness (T3), the inner face sheet (206) has a fourth thickness (T4), and 5*T4 < T3< 10*T4.

3. The apparatus (500, 550) of claims 1 or 2, wherein:
each of the foam (210) pieces have a first thickness (T1), a first length (LI), a surface area (219), a shape (220), and a spacing (222) tailored for a stiffness and structural efficiency of a wing (400) on a supersonic aircraft (508) or an aircraft capable of seating 150 passengers or less.

4. The apparatus (550) of claim 3, wherein:
the plurality of first composite materials (204) includes a plurality of first plies (256) having a first stacking sequence (258),
the plurality of second composite materials (208) includes a plurality of second plies (262) having a second stacking sequence (264), and
the first stacking sequence (258) and the second stacking sequence (264) are tailored for the stiffness and the structural efficiency.

5. The apparatus (550) of any one of claims 1-4, wherein the outer face sheet (202) includes a plurality of recesses, each of the recesses seating (150) and locating one of the foam pieces (212).

6. The apparatus (550) of any one of claims 1-5, wherein:
each of the foam pieces (212) comprise a first sidewall (225a), a second sidewall (225b), a top (229a), and a base (229b), and
the first sidewall (225a) and the second sidewall (225b) are inclined at a first angle (234) with respect to the top (229a) in a range of 90-130 degrees, and
the first sidewall (225a) and the second sidewall (225b) are inclined at a second angle (236) with respect to the base (229b) in a range of 50-90 degrees.

7. The apparatus (550) of any one of claims 1-6, wherein:
the inner face sheet (206) is in physical contact with the outer face sheet (202) in first regions (268) between the foam pieces (212), and
the plurality of first composite materials (204), the plurality of second composite materials (208), or the plurality of first composite materials (204) and the plurality of second composite materials (208) have a higher stiffness in the first regions (268) as compared to in second regions (270) above or below the foam pieces (212).

8. The apparatus (550) of any one of claims 1-7, wherein the inner face sheet (206), the outer face sheet (202), and the foam pieces (212) are co-cured and the foam pieces (212) comprise a material that does not degrade at a temperature of at least 176°C (350 degrees Fahrenheit).

9. The apparatus (550) of any one of claims 1-8, wherein the foam pieces (212) have a density in a range of 48-240 kg/m³ (3-15 pounds per cubic feet (lbs/ft³)) and a first thickness T1 in a range in a range of 1.27<T1<6.35 cm (0.5" < T1 < 2.5")

10. A wing (12, 400) comprising the apparatus (550) of any one of claims 1-9, comprising:
the panels (200) comprising a first panel (302) and a second panel (304);
a base skin (402) including the second panel (304);
a top skin (404) including the first panel (302);
a wing box (300) including:
a forward spar section (310a) including:
a first spar chord (226a) attached to the first panel (302) at a first position (P1);
a second spar chord (226b) attached to the second panel (304) at a second position (P2); and a first spar (310) connecting the first spar chord (226a) and the second spar chord (226b);
an aft spar section (310b) including:
a third spar chord (226c) attached to the first panel (302) at a third position P3;
a fourth spar chord (226d) attached to the second panel (304) at a fourth position (P4); and a second spar (316) connecting the third spar chord (226c) and the fourth spar chord (226d); and wherein:
the first spar (310) and the second spar (316) each extend along a length (405) of an interior (405b) of the wing (400) between a root end (406) of the wing (400) and a tip end (408) of the wing (400);
the first spar (310) and the second spar (316) each intersect with a plurality of ribs (420) directly attached to the base skin (402) and the top skin (404); and
each of the ribs (420) are located within the wing box (300) at a plurality of different locations (407) along the length (405) of the wing (400).

11. The wing (400) of claim 10, wherein:
the inner face sheet (206) is in physical contact with the outer face sheet (202) in first regions (268) between the foam pieces (212), and
in the first regions (268), the plurality of first composite materials (204) include a higher number of first fiber tows (240a) having a first orientation (258a) comprising a zero direction (242a) along a direction of a length (422) of the ribs (420), as compared to in second regions (270), so as to provide higher stiffness in the first regions (268) as compared to in second regions (270) above or below the foam pieces (212), and
in the first regions (268), the plurality of second composite materials (208) comprise a higher number of second fiber tows (240b) having a second orientation (268a) comprising the zero direction (242a) along the direction of the length (422) of the ribs (420), as compared to in the second regions (270), so as to provide the higher stiffness.

12. A method of making one or more panels (200), comprising:
laying one or more first composite materials (204) comprising a plurality of first fiber tows (240a) disposed in a first tape (238a);
laying a plurality of foam (210) pieces on the first composite materials (204);
laying one or more second composite materials (208), including a plurality of second fiber tows (240b) disposed in a second tape (238b), on the foam pieces (212) so as to form a structure (200a) including the one or more first composite materials (204), the one or more second composite materials (208), and the foam pieces (212), wherein the first tape (238a) and the second tape (238b) are pre-impregnated with a resin (252) prior to the laying or comprise preforms with the resin (252) infused after the laying; and
curing the structure (200a) combined with the resin (252) in an autoclave at a pressure and temperature of at least 148°C (300 degrees Fahrenheit), so as to form the structure (200a) into one or more panels (200) having an aerodynamic surface (510), wherein the foam pieces (212) prevent or reduce warping, buckling or collapse of the structure (200a) and the aerodynamic surface (510) under the pressure.

13. The method of claim 12, wherein the one or more first composite materials (204), the one or more second composite materials (208), and the foam pieces (212) are co-bonded and co-cured.

14. The method of claims 12 or 13, further comprising locally controlling a stiffness of the panel (200) by varying a first orientation (258a) of the first fiber tows (240a) in the first tape (238a) and a second orientation (268a) of the second fiber tows (240b)fiber tows in the second tape (238b) across a length (L4) of the panel (200), so as to form first regions (268) having a higher stiffness than second regions (270), wherein the first regions (268) are between the second regions (270).

15. The method of any one of claims 12-14, comprising:
forming a wing (400) comprising the panels (200) including a first panel (302) and a second panel (304), including:
forming a base skin (402) including the second panel (304);
forming a top skin (404) including the first panel (302);
forming a wing box (300) including:
a first spar chord (226a) attached to the first panel (302) at a first position (P1);
a second spar chord (226b) attached to the second panel (304) at a second position (P2); and a first spar (310) connecting the first spar chord (226a) and the second spar chord (226b);
an aft spar section (310b) including:
a third spar chord (226c) attached to the first panel (302) at a third position P3;
a fourth spar chord (226d) attached to the second panel (304) at a fourth position (P4); and a second spar (316) connecting the third spar chord (226c) and the fourth spar chord (226d); and wherein:
the first spar (310) and the second spar (316) each extend along a length (405) of an interior (405b) of the wing (400) between a root end (406) of the wing (400) and a tip end (408) of the wing (400);
disposing a plurality of ribs (420) wherein the first spar (310) and the second spar (316) each intersect with the plurality of ribs (420) directly attached to the base skin (402) and the top skin (404) and wherein each of the ribs (420) are located within the wing box (300) at a plurality of different locations (407) along the length (405) of the wing (400).
